# EUROPEAN PATENT SPECIFICATION

(11) **EP 4 628 755 B1**
(45) Date of publication and mention of the grant of the patent: **04.11.2026**
(21) Application number: 24305512.6
(22) Date of filing: 03.04.2024
(51) Int. Cl.: F16H 25/18, G05G 1/12

(54) **DEVICE FOR A MECHANICAL MOTION TRANSMISSION**
VORRICHTUNG ZUR MECHANISCHEN BEWEGUNGSÜBERTRAGUNG
DISPOSITIF POUR UNE TRANSMISSION DE MOUVEMENT MÉCANIQUE

(43) Date of publication of application: 08.10.2025
(73) Proprietor: ALSTOM Holdings, 93400 Saint-Ouen-sur-Seine (FR)
(72) Inventor: TAINE, Antoine, 65600 SEMEAC (FR); SAELINS, Loïc, 65190 TOURNAY (FR); SEGURET, Denis, 65100 POUEYFERRE (FR)
(74) Representative: Plasseraud IP

(56) References cited:
- DE-B3- 102004 053 033
- US-A- 2 443 995

## Description

The present invention relates to a device for a mechanical motion transmission, said device comprising a first, a second and a third cylinders, coaxially disposed along a same main axis ; the first cylinder being a hollow cylinder, comprising a first radial wall and a first guide slot, said first guide slot extending radially and axially relative to the main axis on the first radial wall ; the second cylinder being a hollow cylinder, rotatable relative to the first cylinder around the main axis ; the third cylinder being disposed inside the first cylinder along the main axis ; the third cylinder comprising a radially protruding pin, said pin being able to slide in the first guide slot during a movement of the third cylinder relative to the first cylinder.

Such mechanical devices are used for converting an actuating rotary movement into a translational actuating movement, as disclosed in document DE102004053033.

However, the known devices are not adapted to complex movements, such as a rotation step followed by a translation step. Document US 2 443 995 A shows a device designed to apply controlled movements to a component, such as, for example, a valve element. The movements illustrated are translational and rotational movements of a shaft or spindle, with distinct translational movements before and after the rotational movement of the shaft.

The invention aims to provide a compact, robust and reliable mechanism, adapted to such complex movements. The objective is achieved by a device as described in claim 1. Advantageous embodiments are described in the dependent claims.

For this purpose, the invention relates to a device of the aforementioned type, wherein : the second cylinder comprises a second radial wall and a second guide slot, said first guide slot extending radially and axially relative to the main axis on the second radial wall ; the third cylinder is disposed inside the second cylinder along the main axis ; and the pin of the third cylinder is able to slide in the first and second guide slots simultaneously.
The second cylinder is disposed around the first cylinder ;
The first and second guide slots are configured so that a rotation of the second cylinder relative to the first cylinder induces a movement of the third cylinder relative to the first cylinder, said movement comprising a step of rotation around the main axis and a step of translation along the main axis, said steps occurring successively ;
The device is movable between an initial configuration and an intermediate configuration through the step of rotation ; and movable between said intermediate configuration and a final configuration through the step of translation ;
The device also comprises a support fixed to the first cylinder ;
The device also comprises : a motor, able to rotate relative to the support around a secondary axis ; and a first coupling member, fixed to the motor ; wherein the second cylinder comprises a second coupling member ; the first and second coupling members being able to cooperate so as to transmit a rotation of the motor to the second cylinder;
The device also comprises : a first connector, fixed to the support ; an arm, fixed to the third cylinder ; and a second connector, fixed to the arm ; the second connector being elastically deformable between a rest conformation and a stressed conformation ; wherein: in the initial configuration, the first and second connectors are distant from each other and the second connector is in the rest conformation ; in the intermediate configuration, the first and second connectors are in contact with each other and the second connector is in the rest conformation ; and in the final configuration, the first and second connectors are in contact with each other and the second connector is in the stressed conformation.

According to preferred embodiments, the device may include one or more of the following features, considered alone or in any technically possible combination :
- the main axis is vertical and in the final configuration, the second connector is situated higher than in the intermediate configuration ;
- the second guide slot comprises a locking portion, perpendicular to the main axis; and in the final configuration, the second connector in the stressed conformation is submitted to an effort parallel to the main axis, so that the pin of the third cylinder is maintained in the locking portion of the second guide slot.

The invention will be easier to understand in view of the following description, provided solely as an example, and with reference to the appended drawings, wherein :
- Figure 1 is an exploded view of a device for a mechanical motion transmission according to a first embodiment of the invention ;
- Figure 2 is a schematic view of elements of the device of Figure 1 ; and
- Figure 3 is a schematic view of a device for a mechanical motion transmission according to a second embodiment of the invention.

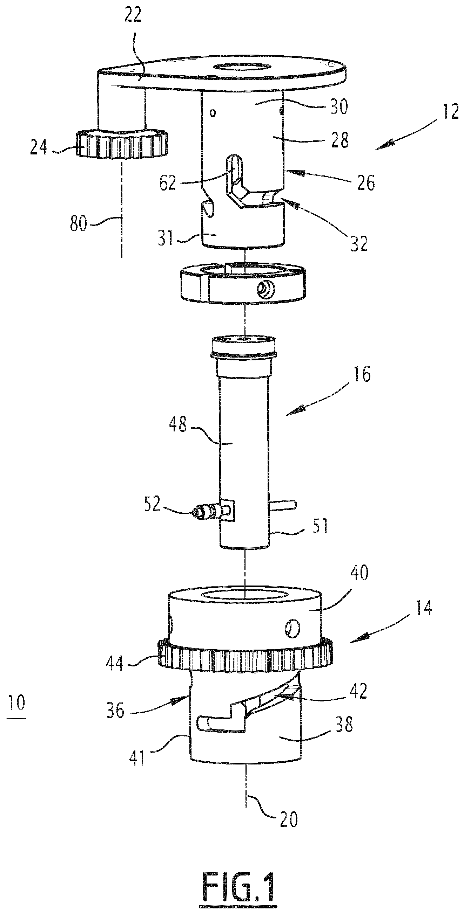

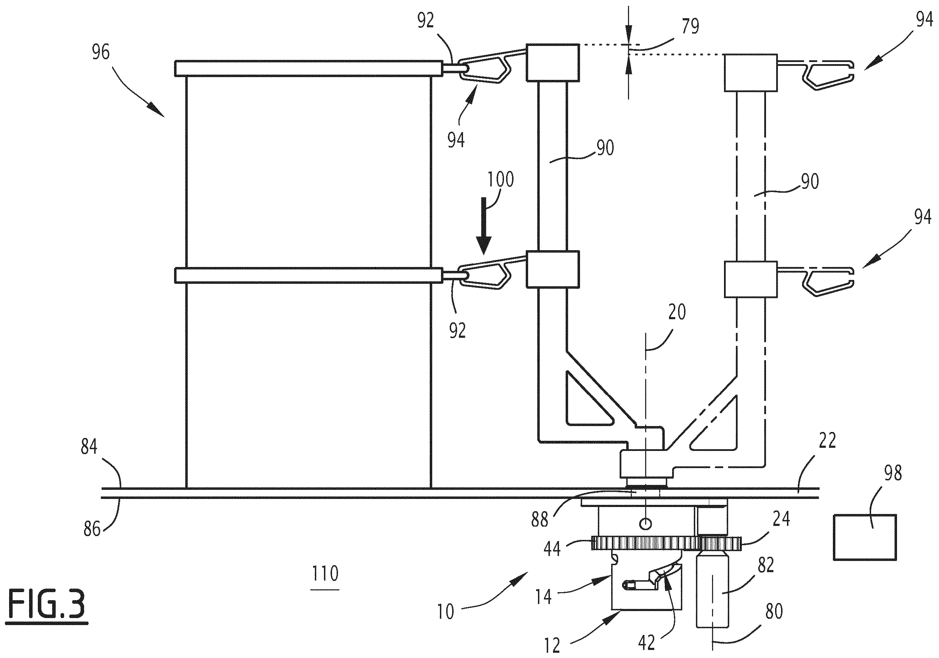

Figure 1 shows a device 10 for a mechanical motion transmission, according to a first embodiment of the invention. Figure 3 shows a device 110 for a mechanical motion transmission, according to a second embodiment of the invention. The device 110 includes the device 10 of Figure 1, as well as complementary elements which will be described specifically.

The devices 10 and 110 will be described simultaneously, the common element being designed by the same reference numbers.

The device 10, 110 comprises a first 12, a second 14 and a third 16 cylinders, coaxially disposed along a same main axis 20.

In the embodiments of Figures 1 and 3, the device 10, 110 also comprises a support 22 and a first coupling member 24.

The first cylinder 12 is a hollow cylinder, comprising a first radial wall 26. The first radial wall comprises an inner surface and an outer surface 28, both surfaces having a circular right cylindrical shape.

The first cylinder 12 extends along the main axis 20 between a first end 30 and a second end 31.

The first cylinder 12 comprises at least one first guide slot 32, extending on the first radial wall 26. The first guide slot 32 is a through slot, joining the inner surface and the outer surface 28 of the first radial wall 26.

As detailed below, the first guide slot 32 extends both radially and axially relative to the main axis 20.

The second cylinder 14 is a hollow cylinder, comprising a second radial wall 36. The second radial wall 36 comprises an inner surface and an outer surface 38, both surfaces having a circular right cylindrical shape.

The second cylinder 14 extends along the main axis 20 between a first end 40 and a second end 41.

The second cylinder 14 comprises at least one second guide slot 42, extending on the second radial wall 36. The second guide slot 42 is a through slot, joining the inner surface and the outer surface 38 of the second radial wall 36.

As detailed below, the second guide slot 42 extends both radially and axially relative to the main axis 20.

The second cylinder 14 is fixed in translation relative to the first cylinder 12. As detailed below, the second cylinder 14 is rotatable relative to the first cylinder 12 around the main axis 20. More precisely, in the shown embodiment, the second radial wall 36 of the second cylinder 14 is disposed around the first radial wall 26 of the first cylinder 12.

In the embodiments of Figures 1 and 3, the second cylinder 14 comprises a second coupling member 44, able to cooperate with the first coupling member 24. For example, as detailed below, the second coupling member 44 comprises a ring gear, fixed to the second radial wall 36. Preferably, the second coupling member 44 is axially situated between the first end 40 and the second guide slot 42 of the second cylinder 14.

The third cylinder 16 comprises an outer surface 48, having a circular right cylindrical shape. The third cylinder 16 extends along the main axis 20 between a first end and a second end 51.

The third cylinder 16 comprises a fixed pin 52, radially protruding from the outer surface 48, close to the second end 51.

The third cylinder 16 is disposed inside the first cylinder 12 and inside the second cylinder 14. More precisely, the pin 52 of the third cylinder 16 is installed both in the first 32 and second 42 guide slots. As detailed below, the pin 52 of the third cylinder 16 is able to slide along the first 32 and/or second 42 guide slots during a movement of the third cylinder 16 relative to the first cylinder 12 and/or to the second cylinder 14. According to the invention the pin 52 of the third cylinder 16 is able to slide along the first 32 and second 42 guide slots simultaneously.

Preferably, as in the shown embodiments, the first cylinder 12 comprises a pair of first guide slots 32, symmetric to each other relative to the main axis 20. In the same manner, the second cylinder 14 comprises a pair of second guide slots 42, symmetric to each other relative to the main axis 20 ; and the third cylinder 16 comprises a pair of pins 52 symmetric to each other relative to the main axis 20. Each pin 52 is disposed in one of the first guide slots 32 and in one of the second guide slots 42.

According to the invention the first 32 and second 42 guide slots are configured so that a rotation of the second cylinder 14 relative to the first cylinder 12 induces a movement of the third cylinder 16 relative to the first cylinder 12. Said movement comprises a step of rotation around the main axis 20 and a step of translation along the main axis, said steps occurring successively.

According to the invention the device 10, 110 is movable between an initial configuration and an intermediate configuration through the step of rotation ; and movable between said intermediate configuration and a final configuration through the step of translation. In other terms, the step of rotation occurs before the step of translation. The initial, intermediate and final configurations will be described below.

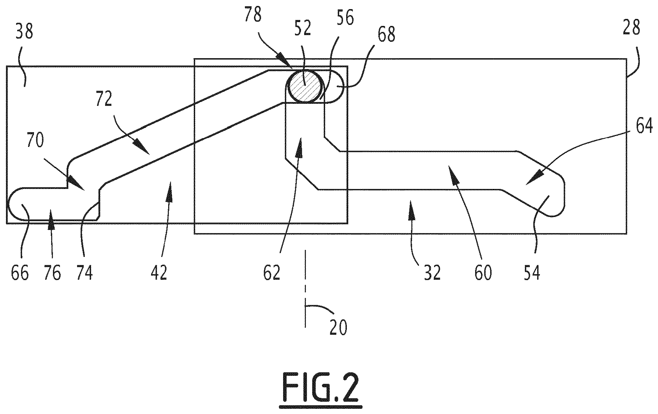

Figure 2 is a schematic, detailed view of the outer surfaces 28, 38 of the first 26 and second 36 radial walls, as a projection on a plane parallel to the main axis 20. A first guide slot 32 and a second guide slot 42 are shown, as well as the pin 52 associated to said first 32 and second 42 guide slots.

As shown on Figure 2, the first guide slot 32 extends between a first 54 and a second 56 closed ends. The first guide slot 32 comprises : a first portion, designed as rotation portion 60 ; and a second portion, designed as translation portion 62. The rotation portion 60 has substantially the shape of an arc of circle extending perpendicular to the main axis 20. The translation portion 62 is substantially rectilinear and parallel to the main axis 20.

In the embodiment of Figure 2, the rotation portion 60 and the translation portion 62 are adjacent to each other. In another embodiment, the rotation portion 60 and the translation portion 62 are connected by an oblique or curved portion of short length.

In the embodiment of Figure 2, an end of the translation portion 62, opposed to the rotation portion 60, is the second closed end 56 of the first guide slot 32. In the embodiment of Figure 2, said second closed end 56 is closer to the first end 30 of the first cylinder 12 than the rotation portion 60.

In the embodiment of Figure 2, the first guide slot 32 also comprises a third portion 64, shorter than the rotation portion 60 and than the translation portion 62. The third portion 64 extends obliquely from the first end 54 of the first guide slot 32 to an end of the rotation portion 60, opposed to the translation portion 62.

As shown on Figure 2, the second guide slot 42 extends between a first 66 and a second 68 closed ends. The second guide slot 42 comprises : a first portion, designed as stationary portion 70 ; and a second portion, designed as helical portion 72.

The stationary portion 70 is substantially rectilinear and parallel to the main axis 20. The stationary portion 70 has a length significantly shorter than the helical portion 72. In particular, the stationary portion 70 comprises a stopping side 74, substantially parallel to the main axis 20.

The helical portion 72 has a substantially helical shape around the main axis 20. The stationary portion 70 and the helical portion 72 are adjacent to each other.

In the embodiment of Figure 2, the helical portion 72 is axially situated between the stationary portion 70 and the first end 40 of the second cylinder 14.

In the embodiment of Figure 2, the second guide slot 42 also comprises a first 76 and a second 78 locking portions. Each of the first 76 and the second 78 locking portions has a length significantly shorter than the helical portion 72 and has substantially the shape of an arc of circle extending perpendicular to the main axis 20.

The first locking portion 76 extends from the first closed end 66 of second guide slot 42, to the stationary portion 70. In particular, the first locking portion 76 faces the stopping side 74 of the stationary portion 70.

The second locking portion 78 extends from the second closed end 68 of second guide slot 42, to an end of the helical portion 72, opposed to the stationary portion 70.

The initial, intermediate and final configurations of the device 10, 110 will now be more precisely described. The terms "first guide slot 32", "second guide slot 42" and "pin 52" refer to one of the pair of pins 52 and to the first 32 and second 42 guide slots associated to said pin.

In the initial configuration of the device 10, 110, the pin 52 is disposed at the first closed end 54 of the first guide slot 32, or in the third portion 64 of said first guide slot. Simultaneously, in the initial configuration, the pin 52 is disposed at the first closed end 66 of the second guide slot 42, or in the first locking portion 76 of said second guide slot 42.

In the initial configuration, the second cylinder 14 has an initial angular position relative to the first cylinder 12. Besides, in the initial configuration, the third cylinder 16 has a first angular position and a first axial position relative to the first cylinder 12.

In the intermediate configuration of the device 10, 110, the pin 52 is disposed in the rotation portion 60 of the first guide slot 32, at a junction with the translation portion 62. Simultaneously, in the intermediate configuration, the pin 52 is disposed in the stationary portion 70 of the second guide slot 42, at a junction with the helical portion 72.

In the intermediate configuration, the second cylinder 14 has an intermediate angular position relative to the first cylinder 12. Besides, in the intermediate configuration, the third cylinder 16 has a second angular position relative to the first cylinder 12. In the intermediate configuration, the axial position of the third cylinder 16 is the same first axial position as in the initial configuration.

A shape of the first guide slot 32, especially a length of the rotation portion 60, determines an angle between the first and second angular positions of the third cylinder 16. Said angle between the first and second angular positions is preferably comprised between 15° and 165°.

As detailed below, the angle between the first and second angular positions is selected as a suitable functional angle necessary for a part, for example an arm, moved by the device 10, 110.

In the final configuration of the device 10, 110, the pin 52 is disposed at the second closed end 56 of the first guide slot 32. Simultaneously, in the final configuration, the pin 52 is disposed at the second closed end 68 of the second guide slot 42, or in the second locking portion 78 of said second guide slot 42.

In the final configuration, the second cylinder 14 has a final angular position relative to the first cylinder 12. The intermediate angular position of the second cylinder 14 is disposed between the initial and final angular positions.

Besides, in the final configuration, the third cylinder 16 has a second axial position relative to the first cylinder 12. In the shown embodiments, in said second axial position, the pin 52 is closer to the first end 30 of the first cylinder 12 than in the first axial position of the third cylinder 16.

A non-zero distance 79 along the main axis 20, shown on Figure 3, separates the first and second axial positions of the third cylinder 16.

In the final configuration of the device 10, 110, the angular position of the third cylinder 16 is the same second angular position as in the intermediate configuration.

The embodiments of the device 10, 110 shown on Figures 1 and 3 will now be more precisely described. The support 22 is fixed to the first end 30 of the first cylinder 12. The first coupling member 24 is able to rotate relative to said support around a secondary axis 80, parallel to the main axis 20.

The first coupling member 24 is able to cooperate with the second coupling member 44 of the second cylinder 14, so as to transmit a rotation of the first coupling member 24 to the second cylinder 14. For example, the first coupling member 24 comprises a ring gear, compatible with the ring gear of the second coupling member 44.

In the embodiment of Figure 3, the device 110 also comprises a motor 82 fixed to the support 22 and to the first coupling member 24. The motor 82 is able to rotate the first coupling member 24 relative to the support 22.

The device 110 of Figure 3 will now be more precisely described.

In the embodiment of Figure 3, the main axis 20 and the secondary axis 80, described above, are disposed vertically ; and the first ends 30, 40 of the first 12 and second 14 cylinders are disposed above the second ends 31, 41 of said first 12 and second 14 cylinders respectively.

In the same manner, in the embodiment of Figure 3, the first end (not shown) of the third cylinder 16 is disposed above the second end 51 of said third cylinder 16.

Moreover, in the embodiment of Figure 3, the support 22 comprises an upper side 84 and a lower side 86 ; the first cylinder 12 is fixed to the lower side 86 of the support 22 ; and a hole 88 is arranged in the support 22. The third cylinder 16 is inserted in said hole 88, so that the first (not shown) and second 51 ends of said third cylinder 16 are closer to the upper side 84 and to the lower side 86 of the support 22, respectively.

The device 110 also comprises : an arm 90 ; and at least a first 92 and a second 94 electrical connectors.

The arm 90 is fixed to the first end (not shown) of the third cylinder 16, so as to be rotatable and translatable relative to the support 22. As detailed below, two different positions of the arm 90 are shown on Figure 3.

The at least one first electrical connector 92 is fixed to the upper side 84 of the support 22. For example, the at least one first electrical connector 92 is an electrical terminal of an electrical equipment 96 fixed to the upper side 84 of the support.

The at least one second electrical connector 94 is fixed to the arm 90. As detailed below, the second electrical connector 94 is elastically deformable in flexion between a rest conformation and a stressed conformation. Preferably, the second electrical connector 94 comprises elongated metallic parts.

In the embodiment of Figure 3, the device 110 comprises a pair of first electrical connectors 92, forming the electrical terminals of the electrical equipment 96. The first electrical connectors 92 are disposed along a first vertical axis.

In the same manner, the device 110 comprises a pair of second electrical connectors 94 fixed to the arm 90. The second electrical connectors 94 are disposed along a second vertical axis, at a same distance of each other as the first electrical connectors 92. Each of the second electrical connectors 94 is configured for being coupled to one of the first electrical connectors 92 described above.

In the initial configuration of the device 110, the arm 90 is in a position shown in dotted lines on the right side of Figure 3. The first 92 and second 94 connectors are distant from each other and the second connector 94 is in the rest conformation.

As detailed below, in the intermediate configuration of the device 110, the first 92 and second 94 connectors are in contact with each other and the second connector 94 is in the rest conformation. In the final configuration, the arm 90 is in a position shown in full lines on the left side of Figure 3. The first 94 and second 92 connectors are in contact with each other and the second connector 94 is in the stressed conformation.

In a preferred embodiment, the arm 90 and the second electrical connectors 94 are part of an earthing switch for the electrical equipment 96. Said earthing swich also comprises an electronic control module 98, connected to the motor 82. The electrical equipment 96, arm 90 and second electrical connectors 94 are for example installed on a roof of a railway vehicle such as a train.

A method of implementing the device 110 of Figure 3 will now be described.

In the initial configuration of the device 110, the first 92 and second 94 connectors are distant from each other and the electrical equipment 96 is activated.

Then, the control module 98 receives an instruction to implement the earthing switch. The control module 98 commands the activation of the motor 82, which leads the second cylinder 14 to rotate around the main axis 20 relative to the first cylinder 12, according to a first direction of rotation.

During a first step of the method, the second cylinder 14 rotates relative to the first cylinder 12 from the initial to the intermediate angular positions. During said first step, the pin 52 of the third cylinder 16 abuts the stopping side 74 of the stationary portion 70 of the second guide slot 42. Simultaneously, the pin 52 of the third cylinder 16 slides in the rotation portion 60 of the first guide slot 32. Therefore, the third cylinder 16 and the arm 90 rotate around the main axis 20, relative to the first cylinder 12 and to the support 22.

The rotation of the first step leads each second electrical connector 94, fixed to the arm 90, to come into contact with a corresponding first electrical connector 92 of the electrical equipment 96. In the intermediate position of the device 110, said contact does not induce an elastic deformation of the second electrical connector 94.

During a second step of the method, following the first rotation step, the second cylinder 14 resumes its rotation relative to the first cylinder 12, from the intermediate to the final angular positions. During said second step, the pin 52 of the third cylinder 16 is in the vertical translation portion 62 of the first guide slot 32, and is therefore blocked in rotation relative to said first guide slot. Simultaneously, the pin 52 of the third cylinder 16 slides in the helical portion 72 of the second guide slot 42 and in the vertical translation portion 62 of the first guide slot 32. Therefore, the third cylinder 16 and the arm 90 translate upwards along the main axis 20, relative to the first cylinder 12 and to the support 22.

In the final configuration of the device 110, each second electrical connector 94 is situated higher than in the intermediate configuration, of the distance 79. As each second electrical connector 94 is still in contact with the corresponding first electrical connector 92, each second electrical connector 94 is deformed in flexion, so as to be in the stressed conformation. In such a stressed conformation, a flexion effort 100 oriented downwards is exerted on each second electrical connector 94 by the corresponding first electrical connector 92.

Due to the downward flexion effort 100, the pin 52 of the third cylinder 16 is maintained in the second locking portion 78 of the second guide slot 42. Therefore, the pin 52 is also blocked at the second closed end 56 of the first guide slot 32. The device 110 is thus maintained in the final configuration, without a supplementary locking system.

More specifically, the device 110 is maintained in the final configuration without an electrical locking system. In particular, the motor 82 may be stopped.

A functional advantage is that the locking position can be granted even if there is no energy. An industrial advantage is that the cost, weight and unreliability of any kind of locking system is not to be considered.

In order to remove the earthing switch arm 90 from the electrical equipment 96, the second cylinder 14 is rotated in a second direction of rotation, opposed to the first direction of rotation. Therefore, the device 110 is moved from the final configuration to the intermediate configuration, the second electrical connectors 94 being relaxed into the rest conformation ; then, the device 110 is moved from the intermediate configuration to the initial configuration, the second electrical connectors 94 being dissociated from the corresponding first electrical connectors 92.

As described above, the device 110 is particularly adapted to the easy manufacturing and use of a safe earthing switch. However, the device 10 of Figure 1 may be incorporated to any mechanical device, allowing the conversion of a rotation into a complex movement of several steps, such as a rotation followed by a translation.

## Claims

1. Device (10, 110) for a mechanical motion transmission, said device comprising a first (12), a second (14) and a third (16) cylinders, coaxially disposed along a same main axis (20) ;
the first cylinder (12) being a hollow cylinder, comprising a first radial wall (26) and a first guide slot (32), said first guide slot extending radially and axially relative to the main axis on the first radial wall ;
the second cylinder (14) being a hollow cylinder, rotatable relative to the first cylinder (12) around the main axis;
the third cylinder (16) being disposed inside the first cylinder along the main axis ;
the third cylinder comprising a radially protruding pin (52), said pin being able to slide in the first guide slot (32) during a movement of the third cylinder relative to the first cylinder ;
wherein
- the second cylinder (14) comprises a second radial wall (36) and a second guide slot (42), said first guide slot extending radially and axially relative to the main axis on the second radial wall ;
- the third cylinder (16) is disposed inside the second cylinder along the main axis ; and
- the pin (52) of the third cylinder is able to slide in the first (32) and second (42) guide slots simultaneously,
wherein the first (32) and second (42) guide slots are configured so that a rotation of the second cylinder (14) relative to the first cylinder induces a movement of the third cylinder (16) relative to the first cylinder (12), said movement comprising a step of rotation around the main axis and a step of translation along the main axis, said steps occurring successively,
the device being movable between an initial configuration and an intermediate configuration through the step of rotation ; and movable between said intermediate configuration and a final configuration through the step of translation,
the device also comprising a support (22) fixed to the first cylinder (12),
the device also comprising : a motor (82), able to rotate relative to the support (22) around a secondary axis (80) ; and a first coupling member (24), fixed to the motor ; wherein the second cylinder (14) comprises a second coupling member (44); the first and second coupling members being able to cooperate so as to transmit a rotation of the motor to the second cylinder,
**characterized in that** the second cylinder (14) is disposed around the first cylinder (12), and **in that** the device also comprises: a first connector (92) fixed to the support (22) ; an arm (90) fixed to the third cylinder (16); and a second connector (94) fixed to the arm ; the second connector being elastically deformable between a rest conformation and a stressed conformation ; wherein :
- in the initial configuration, the first and second connectors are distant from each other and the second connector is in the rest conformation ;
- in the intermediate configuration, the first and second connectors are in contact with each other and the second connector is in the rest conformation ; and
- in the final configuration, the first and second connectors are in contact with each other and the second connector is in the stressed conformation.

2. Device according to claim 1, wherein the main axis is vertical and in the final configuration, the second connector is situated higher than in the intermediate configuration.

3. Device according to claim 1 or 2, wherein the second guide slot (42) comprises a locking portion (78), perpendicular to the main axis (20) ; and wherein, in the final configuration, the second connector (94) in the stressed conformation is submitted to an effort (100) parallel to the main axis, so that the pin (52) of the third cylinder is maintained in the locking portion (78) of the second guide slot (42).

## Patentansprüche

1. Vorrichtung (10, 110) für eine mechanische Bewegungsübertragung, wobei die Vorrichtung einen ersten (12), einen zweiten (14) und einen dritten (16) Zylinder umfasst, welche koaxial entlang einer gemeinsamen Hauptachse (20) angeordnet sind;
wobei der erste Zylinder (12) ein Hohlzylinder ist, welcher eine erste Radialwandung (26) und einen ersten Führungsschlitz (32) aufweist, wobei sich der erste Führungsschlitz radial und axial relativ zu der Hauptachse an der ersten Radialwandung erstreckt;
wobei der zweite Zylinder (14) ein Hohlzylinder ist, welcher relativ zu dem ersten Zylinder (12) um die Hauptachse drehbar ist;
wobei der dritte Zylinder (16) innerhalb des ersten Zylinders entlang der Hauptachse angeordnet ist; wobei der dritte Zylinder einen radial vorstehenden Stift (52) aufweist, welcher dazu eingerichtet ist, dass er in dem ersten Führungsschlitz (32) während einer Bewegung des dritten Zylinders relativ zu dem ersten Zylinder gleitet; wobei
- der zweite Zylinder (14) eine zweite Radialwandung (36) und einen zweiten Führungsschlitz (42) umfasst, wobei sich der zweite Führungsschlitz radial und axial relativ zu der Hauptachse an der zweiten Radialwandung erstreckt;
- der dritte Zylinder (16) innerhalb des zweiten Zylinders entlang der Hauptachse angeordnet ist;
und
- der Stift (52) des dritten Zylinders in der Lage ist, gleichzeitig in dem ersten (32) und dem zweiten (42) Führungsschlitz zu gleiten, wobei der erste (32) und der zweite (42) Führungsschlitz dazu eingerichtet sind, dass eine Rotation des zweiten Zylinders (14) relativ zu dem ersten Zylinder eine Bewegung des dritten Zylinders (16) relativ zu dem ersten Zylinder (12) bewirkt, wobei die Bewegung einen Rotationsschritt um die Hauptachse und einen Translationsschritt entlang der Hauptachse umfasst, wobei die Schritte aufeinanderfolgend stattfinden,
wobei die Vorrichtung zwischen einer Ausgangskonfiguration und einer Zwischenkonfiguration durch den Rotationsschritt bewegbar ist; und zwischen der Zwischenkonfiguration und einer Endkonfiguration durch den Translationsschritt bewegbar ist,
wobei die Vorrichtung ferner eine Halterung (22) umfasst, welche an dem ersten Zylinder (12) befestigt ist,
wobei die Vorrichtung ferner umfasst: einen Motor (82), welcher dazu eingerichtet ist, dass er relativ zu der Halterung (22) um eine Nebenachse (80) rotiert; und ein erstes Kupplungselement (24), welches an dem Motor befestigt ist; wobei der zweite Zylinder (14) ein zweites Kupplungselement (44) umfasst; wobei das erste und das zweite Kupplungselement dazu in der Lage sind, zusammenzuwirken, um eine Rotation des Motors auf den zweiten Zylinder zu übertragen,
**dadurch gekennzeichnet, dass** der zweite Zylinder (14) um den ersten Zylinder (12) herum angeordnet ist, und dass die Vorrichtung ferner umfasst: eine erste Verbindungseinheit (92), welche an der Halterung (22) befestigt ist; einen Arm (90), welcher an dem dritten Zylinder (16) befestigt ist; und eine zweite Verbindungseinheit (94), welche an dem Arm befestigt ist; wobei die zweite Verbindungseinheit zwischen einer Ruhestellung und einer vorgespannten Stellung elastisch verformbar ist; wobei:
- in der Ausgangskonfiguration die erste und die zweite Verbindungseinheit voneinander beabstandet sind und die zweite Verbindungseinheit sich in der Ruhestellung befindet;
- in der Zwischenkonfiguration die erste und die zweite Verbindungseinheit miteinander in Kontakt sind und die zweite Verbindungseinheit sich in der Ruhestellung befindet; und
- in der Endkonfiguration die erste und die zweite Verbindungseinheit miteinander in Kontakt sind und die zweite Verbindungseinheit sich in der vorgespannten Stellung befindet.

2. Vorrichtung nach Anspruch 1, wobei die Hauptachse vertikal ist und in der Endkonfiguration die zweite Verbindungseinheit höher angeordnet ist als in der Zwischenkonfiguration.

3. Vorrichtung nach Anspruch 1 oder 2, wobei der zweite Führungsschlitz (42) einen Verriegelungsabschnitt (78) aufweist, welcher senkrecht zu der Hauptachse (20) ist; und wobei in der Endkonfiguration die zweite Verbindungseinheit (94) in der vorgespannten Stellung einer Kraft (100) ausgesetzt ist, welche parallel zu der Hauptachse verläuft, sodass der Stift (52) des dritten Zylinders in dem Verriegelungsabschnitt (78) des zweiten Führungsschlitzes (42) gehalten wird.

## Revendications

1. Dispositif (10, 110) de transmission de mouvement mécanique, ledit dispositif comprenant un premier (12), un deuxième (14) et un troisième (16) cylindres, disposés coaxialement le long d'un même axe principal (20) ;
le premier cylindre (12) étant un cylindre creux, comprenant une première paroi radiale (26) et une première fente de guidage (32), ladite première fente de guidage s'étendant radialement et axialement par rapport à l'axe principal sur la première paroi radiale ; le deuxième cylindre (14) étant un cylindre creux, rotatif par rapport au premier cylindre (12) autour de l'axe principal ;
le troisième cylindre (16) étant disposé à l'intérieur du premier cylindre selon l'axe principal ; le troisième cylindre comprenant une goupille en saillie radiale (52), ladite goupille étant apte à coulisser dans la première fente de guidage (32) lors d'un mouvement du troisième cylindre par rapport au premier cylindre ;
dans lequel
- le deuxième cylindre (14) comprend une seconde paroi radiale (36) et une seconde fente de guidage (42), ladite première fente de guidage s'étendant radialement et axialement par rapport à l'axe principal sur la seconde paroi radiale ;
- le troisième cylindre (16) est disposé à l'intérieur du deuxième cylindre le long de l'axe principal ; et
- la goupille (52) du troisième cylindre est apte à coulisser dans les première (32) et deuxième (42) fentes de guidage simultanément,
dans lequel les première (32) et deuxième (42) fentes de guidage sont configurées de sorte qu'une rotation du deuxième cylindre (14) par rapport au premier cylindre induise un mouvement du troisième cylindre (16) par rapport au premier cylindre (12), ledit mouvement comprenant une étape de rotation autour de l'axe principal et une étape de translation le long de l'axe principal, lesdites étapes se produisant successivement,
le dispositif étant mobile entre une configuration initiale et une configuration intermédiaire lors de l'étape de rotation ; et mobile entre ladite configuration intermédiaire et une configuration finale lors de l'étape de translation,
le dispositif comprenant également un support (22) fixé au premier cylindre (12),
le dispositif comprenant également : un moteur (82), apte à tourner par rapport au support (22) autour d'un axe secondaire (80) ; et un premier organe d'accouplement (24), fixé au moteur ; dans lequel le deuxième cylindre (14) comprend un second organe d'accouplement (44) ; les premier et second organes d'accouplement étant aptes à coopérer de manière à transmettre une rotation du moteur au deuxième cylindre,
**caractérisé en ce que** le deuxième cylindre (14) est disposé autour du premier cylindre (12), et **en ce que** le dispositif comprend également un premier raccord (92) fixé au support (22) ; un bras (90) fixé au troisième cylindre (16) ; et un second raccord (94) fixé au bras ; le second raccord étant élastiquement déformable entre une conformation de repos et une conformation contrainte ; dans lequel :
- dans la configuration initiale, les premier et second raccords sont éloignés l'un de l'autre et le second raccord est dans la conformation de repos ;
- dans la configuration intermédiaire, les premier et second raccords sont en contact l'un avec l'autre et le second raccord est dans la configuration de repos ; et
- dans la configuration finale, les premier et second raccords sont en contact l'un avec l'autre et le second raccord est dans la conformation contrainte.

2. Dispositif selon la revendication 1, dans lequel l'axe principal est vertical et dans la configuration finale, le second raccord est situé plus haut que dans la configuration intermédiaire.

3. Dispositif selon la revendication 1 ou 2, dans lequel la seconde fente de guidage (42) comprend une partie de verrouillage (78), perpendiculaire à l'axe principal (20) ; et dans lequel, dans la configuration finale, le second raccord (94) dans la conformation contrainte est soumis à un effort (100) parallèle à l'axe principal, de sorte que la goupille (52) du troisième cylindre soit maintenue dans la partie de verrouillage (78) de la seconde fente de guidage (42).
